# DEMANDE DE BREVET EUROPEEN

(11) **EP 2 648 305 A1**
(43) Date de publication de la demande: **09.10.2013**
(21) Numéro de dépôt: 13162357.1
(22) Date de dépôt: 04.04.2013
(51) Int. Cl.: H02J 3/38, H02J 3/50

(54) **Système de collecte de puissance d'une centrale photovoltaïque**

(30) Priorité: 04.04.2012 FR 1253123
(71) Demandeur: Augier, 06510 Carros (FR)
(72) Inventeur: Grinneiser, Raymond, 06250 MOUGINS (FR); Vergine, Pascal, 06000 NICE (FR)
(74) Mandataire: Regimbeau

(57) **Abrégé**

Système de collecte de puissance (1) d'une centrale photovoltaïque connectée à un circuit extérieur (2) à courant alternatif, comprenant :
- un premier circuit (100),
- plusieurs panneaux photovoltaïques (421) connectés à un quatrième circuit (400) de collecte,
- un deuxième circuit (200) en haute tension intermédiaire
- des troisièmes circuits (300) en basse tension,
- une sous-station (110), comprenant un premier transformateur (111) entre le premier circuit (100) de connexion véhiculant une première tension et le deuxième circuit (200) de collecte véhiculant une deuxième tension inférieure à la première tension,
- un deuxième transformateur (310) associé à chaque troisième circuit (300), entre le deuxième circuit (200) de collecte véhiculant la deuxième tension et le troisième circuit de collecte (300) véhiculant une troisième tension inférieure à la deuxième tension, le deuxième circuit (200) collectant la puissance de l'ensemble des troisièmes circuits (300).

## Description

### DOMAINE TECHNIQUE GENERAL

Le domaine de l'invention est celui des centrales photovoltaïques. L'invention concerne plus précisément une architecture d'un système de collecte de puissance d'une centrale photovoltaïque.

### ETAT DE LA TECHNIQUE

Les panneaux solaires photovoltaïques sont des générateurs transformant l'énergie solaire lumineuse en tension continue.

Ils sont généralement constitués de cellules ou films photosensibles constituant une ou plusieurs jonctions semi-conductrices. Au niveau de chaque cellule, l'excitation de ces jonctions par les photons libère des électrons qui sont ensuite collectés au travers de conducteurs.

Un ensemble de cellules sont ainsi mis en série/parallèle, puis encapsulés dans une structure verre-verre ou verre-support, afin d'obtenir un générateur solaire de quelques dizaines de volts, représentant une puissance crête de quelques dizaines à centaines de watts. Ces panneaux sont livrés en dimensions de l'ordre du m².

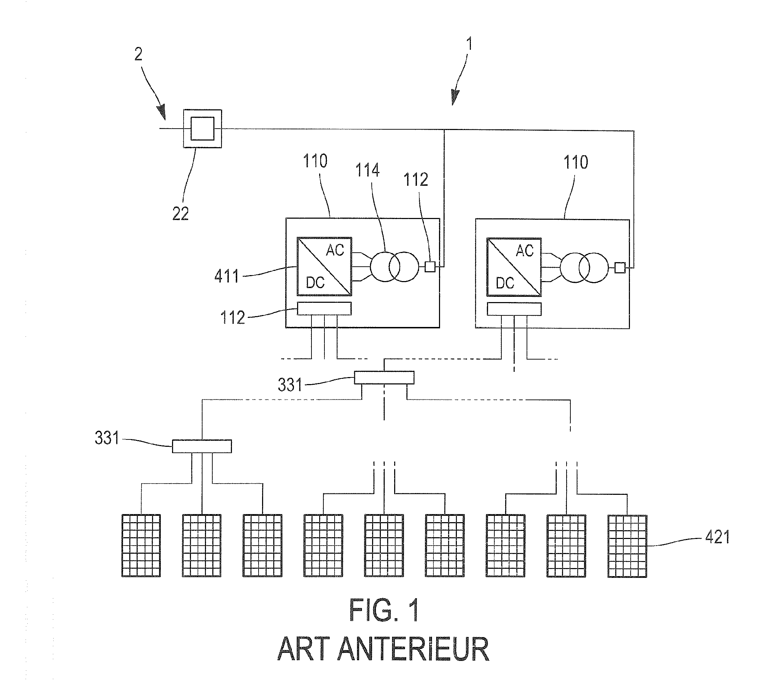

La figure 1 représente schématiquement un premier exemple de système 1 de collecte de puissance d'une centrale photovoltaïque de 10 MWc (Méga-Watt crètes) selon l'état de l'art. Ce système 1 comprend une architecture centralisée est connectée à un circuit extérieur 2 à courant alternatif d'une tension de 20 kV par exemple, à travers un poste 22 de livraison comportant les organes de connexion au réseau

L'architecture centralisée comprend plusieurs sous-stations 110. Ces postes sont des abris incluant chacun un transformateur 114 de 400 V / 20 kV lui-même connecté à un onduleur 411 de 1 MWc par exemple, l'ensemble étant connecté de part et d'autre à des cellules de protection 112.

Les sous-stations 110 sont chacune connectées, via leurs onduleurs 411, à plusieurs séries de boîtes 331 de jonction. Ces boîtes 331 de jonction constituent des équipements coûteux pour une telle installation, surtout si elles sont rendues « intelligentes », ou « surveillées ». Les boites 331 de jonction intelligentes sont reliées entre elles et aux panneaux photovoltaïques 421 par de nombreux kilomètres de câbles (environ 160 km dans une installation typique) de différentes sections allant jusqu'à 300 mm².

Par ailleurs, les sous-stations 110 sont reliées entre elles, leur puissance étant collectée et distribuée au niveau d'un poste 22 de livraison comprenant un compteur et une cellule de protection. Cette dernière partie de l'architecture nécessite quelques centaines de mètres, voire kilomètres, de lignes enterrées de 20 kV. Ces lignes nécessitent des câbles particuliers, ainsi qu'un dispositif de protection impliquant des grillages et des tranchées profondes. De telles lignes sont coûteuses pour une telle architecture.

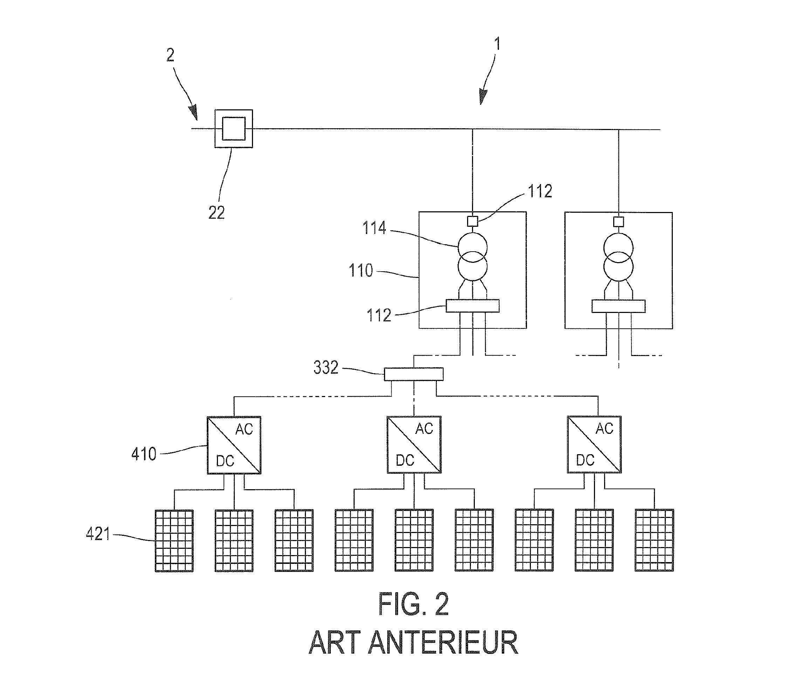

La figure 2 représente schématiquement un deuxième exemple de système 1 de collecte de puissance d'une centrale photovoltaïque de 10 MWc selon l'état de l'art. Ce système 1 est connecté à un circuit extérieur 2 à courant alternatif d'une tension de 20 kV.

Cette architecture diffère de l'architecture centralisée de la figure 1 en ce que des onduleurs 410 de 15 kWc par exemple sont directement connectés aux panneaux photovoltaïque 421.

Les onduleurs 410 sont connectés ensemble et leur puissance collectée par des boîtes 332 de jonctions basiques dans l'ensemble moins coûteuses que les boîtes 331 de jonction « intelligentes ». Les boîtes 332 de jonction sont connectées aux sous-stations 110 désormais dépourvues d'onduleur centralisé. Par ailleurs, le câblage DC de 1 MWc nécessaire entre les boites 331 de jonction intelligentes et les postes de livraison 110 dans l'architecture centralisée a été remplacé par un câblage AC de 15 kWc.

Une telle architecture, dite à chaînes d'onduleurs, demande cependant un nombre élevé d'onduleurs, plus de six cent cinquante dans une installation typique de 10 MWc, et de transformateurs 400 V / 20 kV, ici une quinzaine. De plus, elle nécessite une plus grande longueur de câbles à installer.

Ces deux types d'architectures sont donc coûteux à installer sur des terrains de topologie et de forme particulières du fait du câblage nécessaire, et de la présence de sous-stations réparties sur la surface de la ferme. Ces coûts représentent des freins à une utilisation de certains terrains aujourd'hui non utilisables, tels que des terrains accidentés.

### PRESENTATION DE L'INVENTION

L'invention propose de remédier à au moins un des inconvénients de l'art antérieur. A cet effet, on propose un système de collecte de puissance d'une centrale photovoltaïque connectée à un circuit extérieur à courant alternatif, comprenant :
- un premier circuit de connexion directe au circuit extérieur en haute tension,
- plusieurs panneaux photovoltaïques connectés à un quatrième circuit de collecte, pour collecter la puissance émise par les panneaux photovoltaïques auxquels il est connecté,
- un deuxième circuit de collecte à courant alternatif en haute tension intermédiaire
- des troisièmes circuits de collecte à courant alternatif en basse tension, au moins un quatrième circuit de collecte à courant continu étant associé à chaque troisième circuit,

le système comprenant en outre :
- une sous-station, comprenant un premier transformateur entre le premier circuit de connexion véhiculant une première tension et le deuxième circuit de collecte véhiculant une deuxième tension inférieure à la première tension,
- un deuxième transformateur associé à chaque troisième circuit, entre le deuxième circuit de collecte véhiculant la deuxième tension et le troisième circuit de collecte véhiculant une troisième tension inférieure à la deuxième tension, le deuxième circuit collectant la puissance de l'ensemble des troisièmes circuits,
- un onduleur associé à chaque quatrième circuit, entre le troisième circuit de collecte et le quatrième circuit de collecte à courant continu, chaque troisième circuit collectant la puissance de l'au moins un quatrième circuit auquel il est connecté.

L'invention est avantageusement complétée par les caractéristiques suivantes, prises seules ou en une quelconque de leurs combinaisons techniquement possibles :
- les panneaux photovoltaïques sont regroupés sur des sous-circuits distincts de chaque quatrième circuit, chaque sous-circuit n'étant connecté au reste du système que par l'onduleur associé,
- au moins un sectionneur entre au moins un sous-circuit d'un quatrième circuit de collecte et le troisième circuit de collecte associé pour isoler ladite partie du quatrième circuit de collecte,
- des blocs de circuit chacun constitué de :
   o l'un des troisièmes circuits de collecte, et
   o l'au moins un onduleur et les quatrièmes circuits associés à ce troisième circuit, chaque bloc étant distinct des autres blocs et n'étant connecté au reste du système que par le deuxième transformateur associé,
- les deuxièmes transformateurs sont enterrés et sont disposés en série sur des branches parallèles distinctes du deuxième circuit formant des lignes, les lignes n'étant connectées entre elles et au reste du système que par une de leurs extrémités,
- un coffret de protection et de connexion comprenant un interrupteur général de protection, entre au moins un deuxième transformateur et au moins un troisième circuit associé,
- la sous-station est unique et comporte en outre au moins une cellule de protection électrique entre le premier transformateur et le deuxième circuit de collecte,
- le coffret de protection et de connexion et/ou la cellule de protection comporte(nt) des moyens de protection du système contre la foudre,
- des moyens de contrôle des onduleurs via les circuits à courant alternatif par courants porteurs en ligne,
- des moyens de contrôle des panneaux photovoltaïques par les onduleurs.

Selon un autre aspect, l'invention concerne une centrale photovoltaïque comprenant un tel système.

### PRESENTATION DES FIGURES

D'autres caractéristiques et avantages de l'invention ressortiront encore de la description qui suit, laquelle est purement illustrative et non limitative et doit être lue en regard des dessins annexés sur lesquels :
- la figure 1, déjà commentée, représente schématiquement un premier exemple d'architecture dite centralisée de centrale photovoltaïque selon l'art antérieur,
- la figure 2, déjà commentée, représente schématiquement un deuxième exemple d'architecture dite à chaînes d'onduleurs de centrale photovoltaïque selon l'art antérieur,
- la figure 3 représente schématiquement un premier exemple d'architecture de centrale photovoltaïque selon un mode de réalisation de l'invention,
- les figures 4a, 4b représentent schématiquement un deuxième exemple d'architecture de centrale photovoltaïque selon un mode de réalisation de l'invention,
- la figure 5 représente schématiquement l'occupation d'un terrain par le deuxième exemple d'architecture de centrale photovoltaïque selon un mode de réalisation de l'invention

Un objectif de l'invention est de proposer un système de collecte de puissance de centrale photovoltaïque qui ne présente pas certains des inconvénients de l'art antérieur cités ci-avant.

Un objectif de l'invention est de proposer un système de collecte de puissance de centrale photovoltaïque qui soit peu coûteux en termes de matériel.

Un objectif de l'invention est de proposer un système de collecte de puissance de centrale photovoltaïque qui soit aisé à installer sur des terrains de formes variées.

Un autre objectif de l'invention est de proposer un système de collecte de puissance qui rende les terrains de formes variées propices à l'installation d'une ferme photovoltaïque.

### DESCRIPTION DETAILLEE

### Premier exemple d'architecture de système

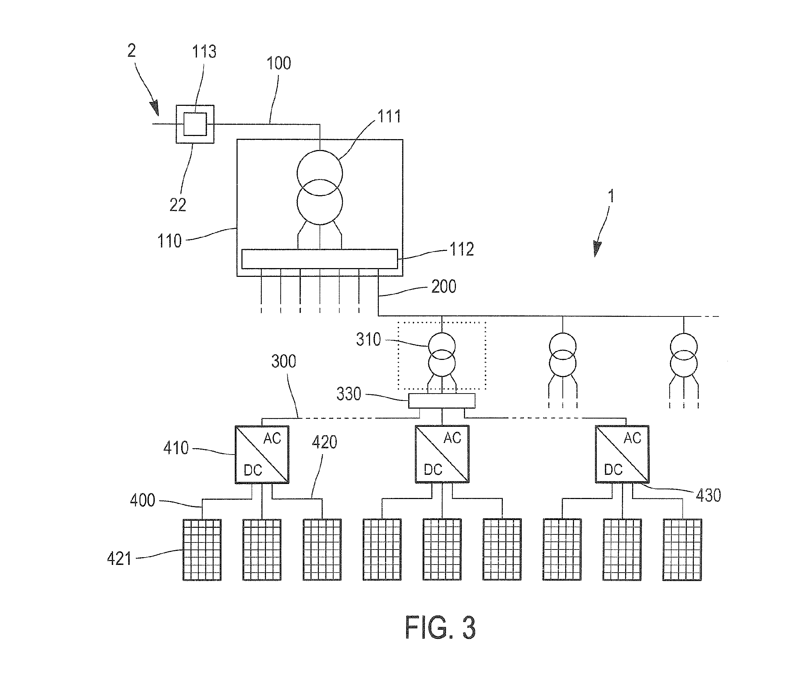

En référence à la figure 3, il est décrit un premier exemple de système de collecte de puissance 1 d'une centrale photovoltaïque. Il peut s'agir d'une centrale photovoltaïque de 250 kWc à 50 MWc, par exemple 10 MWc. La centrale photovoltaïque peut s'étendre sur un territoire d'une taille allant de 0,7 à 150 hectares. Le système 1 est connecté directement à un circuit extérieur 2 à courant alternatif. Il s'agit d'un circuit à haute tension à courant alternatif, par exemple triphasé de 20 kV.

Le système 1 comprend plusieurs circuits correspondant à différents niveaux de tension. Le système comprend un premier circuit 100 de connexion directe au circuit extérieur 2 en haute tension. Ce premier circuit 100 assure la connexion entre la centrale photovoltaïque et le circuit extérieur 2. Il présente donc des caractéristiques électriques comparables à celles du circuit extérieur 2.

Un poste de livraison 22 est disposé entre le circuit extérieur 2 et le premier circuit 100. Le poste de livraison 22 comprend par exemple une cellule de protection 113 pour la protection électrique du système 1, et éventuellement une protection supplémentaire contre la foudre. Le poste de livraison 22 accueille en outre une cellule de comptage de la centrale photovoltaïque.

Le système 1 comprend un deuxième circuit 200 de collecte à courant alternatif en haute tension intermédiaire. Ce deuxième circuit 200 véhicule une tension moins importante que le circuit extérieur 2. Le deuxième circuit 200 permet la distribution des panneaux photovoltaïques de la centrale sur le terrain.

Une sous-station 110 est disposée entre le premier circuit 100 et le deuxième circuit 200. La sous-station 110 comprend par exemple un unique poste béton. La sous-station 110 comprend un premier transformateur 111 entre le premier circuit 100 de connexion véhiculant une première tension V₁ et le deuxième circuit 200 de collecte véhiculant une deuxième tension V₂ inférieure à la première tension V₁ au niveau du premier transformateur 111. Si nécessaire, plusieurs premiers transformateurs 111 peuvent être placés en parallèle. La sous-station comporte en outre au moins une cellule 112 de protection électrique entre le premier transformateur 111 et le deuxième circuit 200 de collecte.

Le système 1 comprend des troisièmes circuits 300 de collecte. Ces troisièmes circuits 300 sont à courant alternatif et fonctionnent en basse tension. Les troisièmes circuits sont chacun propres à une partie du système.

Un deuxième transformateur 310 est associé à chaque troisième circuit 300, entre le deuxième circuit 200 de collecte véhiculant la deuxième tension V₂ et au moins un troisième circuit de collecte 300 véhiculant une troisième tension V₃ appartenant aux basses tensions et inférieure à la deuxième tension V₂. Le deuxième circuit 200 collecte ainsi la puissance de l'ensemble des troisièmes circuits 300.

Pour chaque troisième circuit 300 de collecte, le système présente au moins un quatrième circuit 400 de collecte à courant continu. Les quatrièmes circuits 400 sont directement connectés aux panneaux photovoltaïques 421.

Un onduleur 410 est associé à chaque quatrième circuit 400, entre le troisième circuit 300 de collecte à courant alternatif et au moins un quatrième circuit 400 de collecte à courant continu, chaque troisième circuit 300 collectant la puissance de l'au moins un quatrième circuit 400 auquel il est connecté,

Plusieurs panneaux photovoltaïques 421 sont connectés au quatrième circuit 400 de collecte. Le quatrième circuit 400 permet ainsi de collecter la puissance émise par les panneaux photovoltaïques 421 auxquels il est connecté.

Dans le cas particulier présenté à la figure 3, trois troisièmes circuits 300 et leurs onduleurs associés sont connectés à chaque deuxième transformateur, 310. Trois quatrièmes circuits 300 sont connectés séparément à chaque onduleur 410, chaque quatrième circuit 400 étant connecté à un unique panneau photovoltaïque 421. Il est possible d'associer plus ou moins de troisièmes circuits 300 à chaque deuxième transformateur 310, plus ou moins de quatrièmes circuits 400 à chaque onduleur 410, et plus d'un panneau photovoltaïque 421 à chaque quatrième circuit 400 en fonction de la puissance de la centrale photovoltaïque voulue.

### Deuxième exemple d'architecture de système

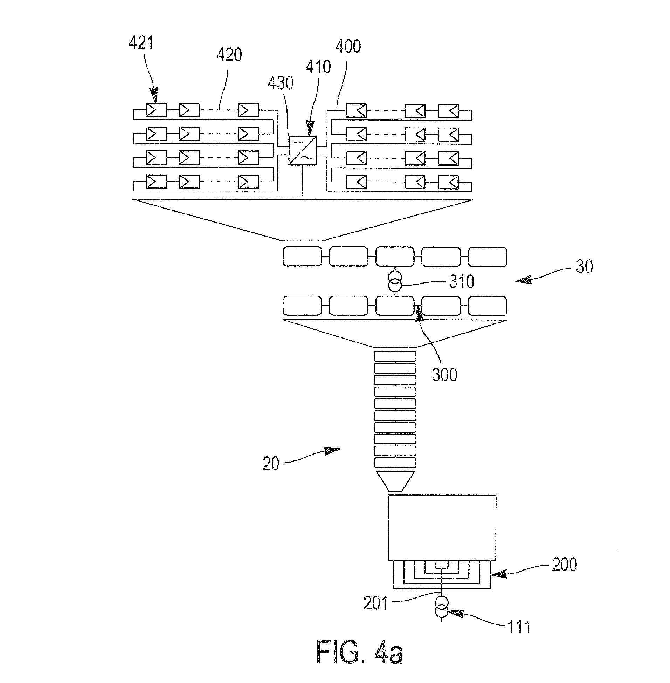

En référence à la figure 4a, il est décrit un deuxième exemple de système de collecte de puissance 1 d'une centrale photovoltaïque. La centrale photovoltaïque a par exemple une puissance de 10 MWc.

La centrale photovoltaïque présente la même architecture que celle décrite dans le premier exemple, comprenant plusieurs niveaux de circuits de collecte, par exemple quatre, présentant des caractéristiques de tension et de courant différentes. Les différents niveaux de circuits sont connectés au moins par un premier transformateur 111, un deuxième transformateur 310 et un onduleur 410 tel que décrit précédemment.

### Ensemble panneaux-onduleur

Les panneaux photovoltaïques 421 sont par exemple rectangulaires de dimensions 1,65 m et 1 m. Ils peuvent alors présenter une puissance de 220 Wc. Les panneaux photovoltaïques 421 sont regroupés sur des sous-circuits distincts 420 de chaque quatrième circuit 400, chaque sous-circuit 420 n'étant connectée au reste du système 1 que par l'onduleur 410 associé. L'onduleur 410 est par exemple un onduleur de type 10 kWc présentant une sortie de 5x400V. L'onduleur 410 peut par exemple présenter deux sous-circuits 420. Les panneaux photovoltaïques de chaque sous-circuit sont reliés entre eux et à l'onduleur 410 par environ 100 m de câbles de 4 mm² de section adaptés pour supporter des tensions de 1000 V en courant continu.

Chaque sous-circuit 420 comprend quatre groupes de six panneaux photovoltaïques 421.

L'ensemble comprenant l'onduleur 410 et les deux sous-circuits 420 forme un ensemble panneaux-onduleur indépendant s'étend sur une surface de 3,5 m de large par 20 m de long. Cet ensemble panneaux-onduleur collecte une puissance de 10 kWc. Cet ensemble panneaux-onduleur n'est connecté au reste du système que par le troisième circuit 300 associé.

Il est possible de disposer un sectionneur 430, par exemple un sectionneur 1000 V en courant continu entre au moins un sous-circuit 420 d'un quatrième circuit 400 de collecte et le troisième circuit 300 de collecte associé pour isoler ledit sous-circuit 420 du quatrième circuit 400 de collecte. Le sectionneur 430 peut être extérieur à l'onduleur 410, ou directement intégré dans l'onduleur 410.

### Bloc du troisième circuit

L'architecture du système 1 comprend des blocs 30 de circuit chacun constitué de l'un des troisièmes circuits 300 de collecte, et des onduleurs 410 et des quatrièmes circuits 420 associés à ce troisième circuit 300.

Chaque bloc 30 est distinct des autres blocs 30 et n'est connecté au reste du système 1 que par le deuxième transformateur 310 associé. Dans l'exemple, chaque bloc 30 comprend dix ensembles panneaux-onduleur, connectés par environ 320 m de câbles de 10 mm² de section et de 5X400V en courant alternatif. Sur la figure 4a, les ensembles panneaux-onduleur sont réunis en deux ensembles distincts de cinq ensembles panneaux-onduleur, reliés séparément au deuxième transformateur 310.

Le système peut comprendre un coffret 330 de protection et de connexion comprenant un interrupteur général de protection.

Chaque bloc 30 présente ainsi une puissance collectée de 100 kWc et s'étend typiquement sur une surface de 13,5 m de large par 100 m de long.

### Lignes du deuxième circuit

Les deuxièmes transformateurs 310 sont de type 10 kWc 5x400 V / 3X6.6 kV. Ils permettent une augmentation de la tension dans le système, et ainsi une diminution correspondante de la charge.

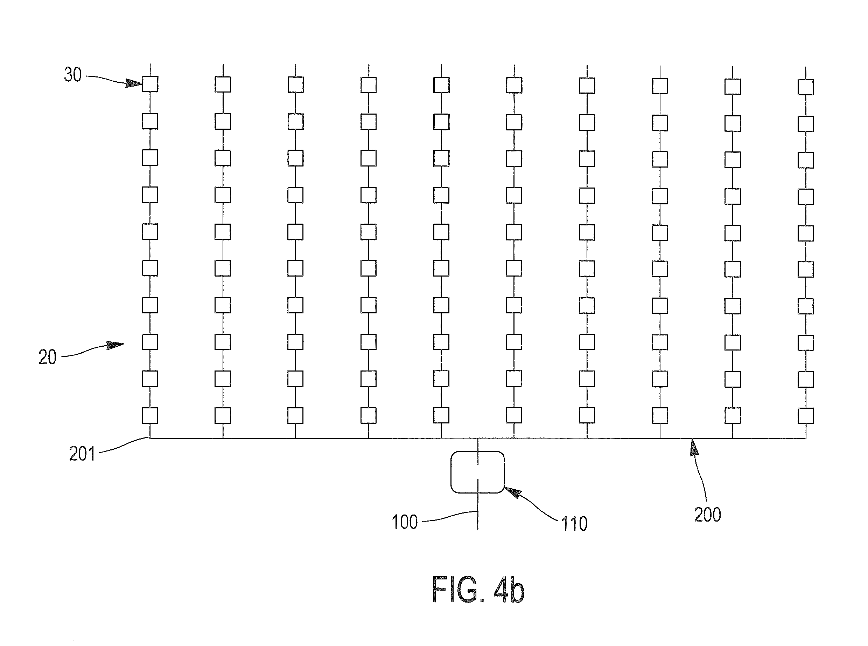

En référence aux figures 4a et 4b, les deuxièmes transformateurs 310 sont enterrés et sont disposés sur des branches 20 parallèles distinctes du deuxième circuit 200 formant des lignes, les lignes n'étant connectées entre elles et au reste du système 1 que par une de leurs extrémités 201. Ces lignes de dix blocs s'étendent sur 260 m environ dans des tranchées. Les blocs 30 de chaque ligne sont reliés entre eux par environ 260 m de câbles de 16 à 50 mm2 de section et de tension 3x6,6 kV.

Dans l'exemple de la figure 4a, environ 2,5 km supplémentaires de câbles sont nécessaires pour relier les lignes entre elles et au premier transformateur 111 de la sous-station 110.

Dans l'exemple de la figure 4b, 3,5 km environ de tranchées pour câbles sont nécessaires. Les deuxièmes transformateurs 310 sont disposés dans des regards enterrés.

Chaque ligne présentant une puissance collectée de 1 MWc, le premier transformateur 111 collecte une puissance cumulée de 10 MWc.

Le premier transformateur 111 peut être composé par exemple de deux transformateurs 6,6 kV / 20 kV, de 5 MWp chacun.

La sous-station 110 est connectée au circuit extérieur 2 par 15 m environ de câble 3x20 kV.

### Occupation du terrain

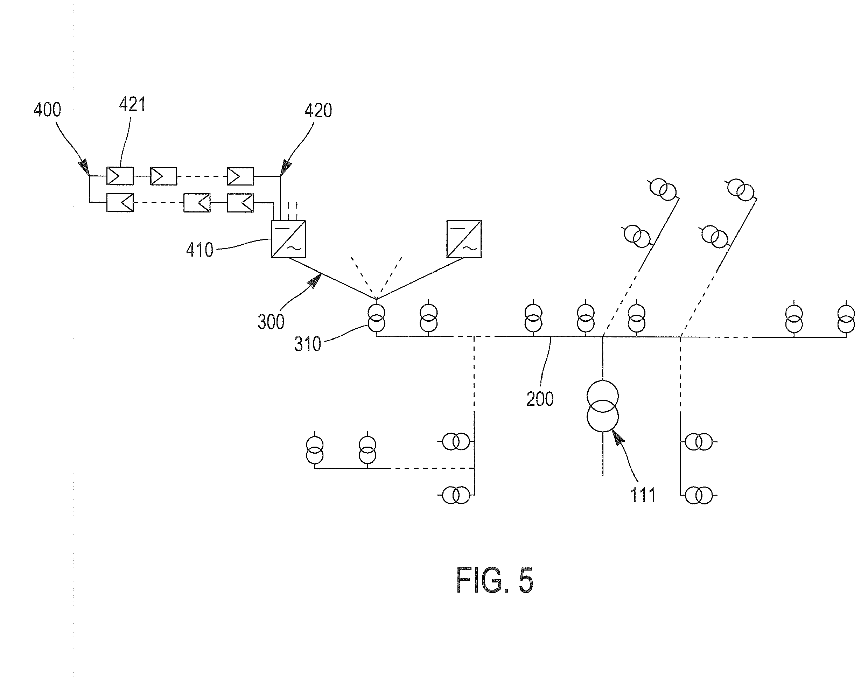

En référence à la figure 5, l'occupation d'un terrain par un système 1 est présentée. Les systèmes telles que décrits dans l'état de l'art sont adaptés pour des terrains réguliers et de formes géométriques régulières simples telles que des rectangles. Il est difficile d'installer des systèmes selon l'art antérieur sur des terrains de forme irrégulière, éclatés ou très allongés, présentant une topologie particulière, par exemple en montagne. En effet, de tels terrains peuvent poser plusieurs problèmes. D'une part ils nécessitent de grandes longueurs de câblage basse tension de section très importante, ce qui implique un coût important en termes de matériel et de tirage de câble et une perte importante de rendement. Par ailleurs l'accès à ces terrains peut être difficile, ce qui implique des coûts élevés de travaux et de construction, en particulier pour les postes en béton tels que les sous-stations, généralement véhiculés par des semi-remorques et demandant des moyens de levage lourds.

Le système 1 tel que décrit sur la figure 5 présente une variante du deuxième exemple de système 1. Les deuxièmes transformateurs 310 ne sont pas organisés en lignes parallèles, mais selon des réseaux dépendant de la géographie du terrain et de ses caractéristiques d'exposition. Ainsi le système permet de placer plus de panneaux photovoltaïques 421 à un moindre coût.

En effet, l'éclatement de l'architecture du système est permis par le deuxième circuit 200 à une haute tension intermédiaire, par exemple 6,6 kV triphasé, situé entre les deuxièmes transformateurs 310 et le premier transformateur 111 de la sous-station 110. Le rendement est meilleur et les coûts sont moins importants que si un câblage pour courant continu était installé à la place, ou un câblage pour courant alternatif en haute tension comme dans le cas du premier exemple de système selon l'art antérieur. En particulier aucune boîte de jonction ou de raccordement n'est nécessaire. Le système est également plus performant que dans le cas d'un câblage à courant alternatif basse tension, comme dans le cas du deuxième exemple de système selon l'art antérieur.

En effet, la présence des deuxièmes transformateurs permet une réduction de la charge sans pour autant présenter les inconvénients de la haute tension. Dans l'exemple, les deuxièmes transformateurs 310 permettent de diminuer l'ampérage total résultant des panneaux photovoltaïques de 14 kA à 875 A, si l'on considère le cumul des courants moyens transportés. Il est ainsi possible d'utiliser un câblage de section restreinte sur des dizaines de kilomètres et des installations moins importantes en termes de génie civil.

Par ailleurs une seule sous-station, ou un nombre très restreint de sous-station est nécessaire, contrairement au premier exemple selon l'art antérieur, les deuxièmes transformateurs 310 enterrés étant plus simples et moins coûteux à installer.

Le système permet ainsi d'obtenir un rendement entre l'énergie utile fournie et de l'énergie totale consommée inégalé dans l'art antérieur. En effet, les longueurs de câblages en courant continu des quatrièmes circuits 400 impliquent des pertes inférieures à 0,1%, les onduleurs 410 impliquant des pertes d'environ 2,7 %. Les longueurs de câblages en courant alternatif basse tension des troisièmes circuits 300 en courant alternatif basse tension impliquent des pertes inférieures à 0,3 %, les deuxièmes transformateurs 310 impliquant des pertes de 2 % environ. Le câblage en courant alternatif haute tension intermédiaire du deuxième circuit 200, qui permet l'occupation du terrain, sont estimés entre 0,1 et 0,9 %. Enfin les pertes dues au premier transformateur 111 sont considérées comme inférieures à 1 %.

### Communication

Le système 1 peut comporter des moyens de contrôle des onduleurs via les circuits à courant alternatif par courants porteurs en ligne. Cette technologie permet de superposer des signaux de communication à la forme d'onde de puissance. Cette technologie permet de transporter des informations sur plusieurs kilomètres de câbles de puissance, et éviter ainsi l'installation et le maintien d'un réseau de communication séparé.

Les données d'au moins un onduleur 410 sont transmises par les câbles AC, via au moins un deuxième transformateur 310 jusqu'à un tableau basse tension situé par exemple dans la sous-station 110.

Par les courants porteurs en ligne, les onduleurs 410 peuvent être contrôlés, par exemple le facteur de puissance et la puissance réactive peuvent être gérés.

Le système peut en sus comprendre des moyens de contrôle des panneaux photovoltaïques par les onduleurs. De tels moyens pour protéger ou diagnostiquer chaque panneau photovoltaïque 421 sont décrits dans les demande de brevet déposée sous les numéros FR1159970 et FR1159972.

Par ailleurs, le système est en mesure de communiquer avec des réseaux de communication extérieurs, par exemple via le tableau basse tension. Il est ainsi possible d'être informer à distance des équipements défectueux et de leur localisation dans la centrale.

## Revendications

1. Système de collecte de puissance (1) d'une centrale photovoltaïque connectée à un circuit extérieur (2) à courant alternatif, comprenant :
- un premier circuit (100) de connexion directe au circuit extérieur en haute tension,
- plusieurs panneaux photovoltaïques (421) connectés à un quatrième circuit (400) de collecte, pour collecter la puissance émise par les panneaux photovoltaïques (421) auxquels il est connecté,
**caractérisé en ce qu'il** comprend :
- un deuxième circuit (200) de collecte à courant alternatif en haute tension intermédiaire,
- des troisièmes circuits (300) de collecte à courant alternatif en basse tension, au moins un quatrième circuit (400) de collecte à courant continu étant associé à chaque troisième circuit (300),
le système comprenant en outre :
- une sous-station (110), comprenant un premier transformateur (111) entre le premier circuit (100) de connexion véhiculant une première tension (V₁) et le deuxième circuit (200) de collecte véhiculant une deuxième tension (V₂) inférieure à la première tension (V₁),
- un deuxième transformateur (310) associé à chaque troisième circuit (300), entre le deuxième circuit (200) de collecte véhiculant la deuxième tension (V₂) et le troisième circuit de collecte (300) véhiculant une troisième tension (V₃) inférieure à la deuxième tension (V₂), le deuxième circuit (200) collectant la puissance de l'ensemble des troisièmes circuits (300),
- un onduleur (410) associé à chaque quatrième circuit (400), entre le troisième circuit (300) de collecte et le quatrième circuit (400) de collecte à courant continu, chaque troisième circuit (300) collectant la puissance de l'au moins un quatrième circuit (400) auquel il est connecté.

2. Système selon la revendication 1, **caractérisé en ce que** les panneaux photovoltaïques (421) sont regroupés sur des sous-circuits distincts (420) de chaque quatrième circuit (400), chaque sous-circuit (420) n'étant connecté au reste du système (1) que par l'onduleur (410) associé.

3. Système selon la revendication précédente, **caractérisé en ce qu'il** comporte au moins un sectionneur (430) entre au moins un sous-circuit d'un quatrième circuit (400) de collecte et le troisième circuit (300) de collecte associé pour isoler ladite partie du quatrième circuit (400) de collecte.

4. Système selon l'une quelconque des revendications précédentes, **caractérisé en ce qu'il** comprend des blocs (30) de circuit chacun constitué de :
- l'un des troisièmes circuits (300) de collecte, et
- l'au moins un onduleur (410) et les quatrièmes circuits (420) associés à ce troisième circuit (300),
chaque bloc (30) étant distinct des autres blocs (30) et n'étant connecté au reste du système (1) que par le deuxième transformateur (310) associé.

5. Système selon l'une quelconque des revendications précédentes, **caractérisé en ce que** les deuxièmes transformateurs (310) sont enterrés et sont disposés en série sur des branches (20) parallèles distinctes du deuxième circuit (200) formant des lignes, les lignes n'étant connectées entre elles et au reste du système (1) que par une de leurs extrémités (201).

6. Système selon l'une quelconque des revendications précédentes, **caractérisé en ce qu'il** comporte au moins un coffret (330) de protection et de connexion comprenant un interrupteur général de protection, entre au moins un deuxième transformateur (310) et au moins un troisième circuit (300) associé.

7. Système selon l'une quelconque des revendications précédentes, **caractérisé en ce que** la sous-station (110) est unique et comporte en outre au moins une cellule (112) de protection électrique entre le premier transformateur (111) et le deuxième circuit (200) de collecte.

8. Système selon les revendications 6 et 7, **caractérisé en ce que** le coffret (330) de protection et de connexion et/ou la cellule (112) de protection comporte(nt) des moyens de protection du système contre la foudre.

9. Système selon l'une quelconque des revendications précédentes, **caractérisée en ce qu'il** comporte des moyens de contrôle des onduleurs via les circuits à courant alternatif par courants porteurs en ligne.

10. Système selon la revendication précédente, **caractérisé en ce qu'il** comporte des moyens de contrôle des panneaux photovoltaïques par les onduleurs.

11. Centrale photovoltaïque **caractérisée en ce qu'**elle comprend un système selon l'une quelconque des revendications précédentes.
